# EUROPÄISCHE PATENTSCHRIFT

(11) **EP 2 112 540 B1**
(45) Veröffentlichungstag und Bekanntmachung des Hinweises auf die Patenterteilung: **26.05.2010**
(21) Anmeldenummer: 08103656.8
(22) Anmeldetag: 22.04.2008
(51) Int. Cl.: G02B 7/04, G06K 7/10

(54) **Identifikationseinrichtung zur linienförmigen Erfassung eines in einer Objektebene angeordneten Codes**
Identification device for line-scanning a code in an object plane
Dispositif d'identification pour l'acquisition linéaire d'un code dans un plan d'objet

(43) Veröffentlichungstag der Anmeldung: 28.10.2009
(73) Patentinhaber: SICK AG, 79183 Waldkirch (DE)
(72) Erfinder: Nübling, Ralf Ulrich, 79211 Denzlingen (DE)
(74) Vertreter: Hehl, Ulrich

(56) Entgegenhaltungen:
- EP-A- 0 801 315
- EP-A- 1 698 995
- DE-A1- 19 950 060

## Beschreibung

Die Erfindung betrifft eine Identifikationseinrichtung, insbesondere zur linienförmigen Erfassung von einem in einer Objektebene angeordneten Code.

Bei den aus dem Stand der Technik bekannten Identifikationseinrichtungen wird über eine Empfangsoptik ein Abbild von einem in der Objektebene vorhandenen Code in einer Bildebene erzeugt. In dieser Bildebene befindet sich ein ortsauflösender Lichtempfänger, bei welchem mehrere Lichtempfängerpixel zeilen- oder matrixförmig angeordnet sind.

Die im Code und demzufolge auch im Abbild des Codes vorhandenen unterschiedlichen Kontraste erzeugen in den einzelnen Lichtempfängerpixeln unterschiedliche Photoströme, aus denen dann über eine Signalverarbeitung der Codeinhalt identifizierbar ist.

Derartige Codierungen werden in vielseitigen Anwendungsgebieten eingesetzt, so zum Beispiel zur Identifizierung und Steuerung einzelner Objekte in der Fördertechnik. Dabei ist der Code nicht auf eine bestimmte Codeart beschränkt, sondern umfasst alle mit einer Bildverarbeitungseinrichtung erkennbaren Varianten von Informationsträgern.

Von leistungsfähigen Identifikationseinrichtungen wird erwartet, dass immer größere Informationsmengen auf möglichst kleinen Codeflächen gelesen werden können. Dies bedeutet, dass von der Identifikationseinrichtung eine hohe Ortsauflösung gefordert wird. Insbesondere dann, wenn sich der Code noch zusätzlich innerhalb ei nes großen Tiefenbereiches befindet, sind an die Identifikationseinrichtung hohe Anforderungen gestellt. Eine weitere Anforderung an leistungsstarke Identifikationseinrichtungen besteht in der hohen Lesegüte, welche ebenfalls eine exakte Abbildung erforderlich macht. Diese beiden Bedingungen, d. h. großer Tiefenbereich und gleichzeitig exakte Abbildung, setzen voraus, dass die Identifikationseinrichtung oft mit einer Fokusverstelleinrichtung ausgerüstet sein muss.

Dabei wird die Fokusverstellung in Abhängigkeit von der jeweiligen Aufgabenstellung beispielsweise durch eine manuelle Einstellung vorgenommen, wenn die Identifikationseinrichtung nur einmalig auf einen bestimmten Objektabstand bei der Inbetriebnahme eingestellt werden muss. Wenn jedoch eine Fokusverstellung häufig und kurzfristig geändert werden muss ist es notwendig, eine Identifikationseinrichtung einzusetzen, bei der diese Fokusverstellung von einem automatischen Autofokusprozess durchgeführt wird. Deshalb sind auch Identifikationseinrichtungen bekannt, bei denen die Fokusverstellung vollständig in die Identifikationseinrichtung integriert ist.

Neben der Frage, wann eine Fokusverstellung notwendig ist, sind auch zur Durchführung dieser Fokusverstellung mehrere Lösungen bekannt. So wird für die Fokusverstellung zum Beispiel die gesamte in einem Tubus eingebaute Empfangsoptik mit Hilfe eines Servomotors in einer Führung in Richtung der optischen Achse bewegt. Es sind auch Lösungen zur Fokusverstellung bekannt, bei denen die Empfangsoptik stationär positioniert, während der ortsauflösende Lichtempfänger in seinem Abstand zur Empfangsoptik veränderbar angeordnet ist.

Bei den bekannten Identifikationseinrichtungen, die mit einer Fokusverstellung ausgestattet sind, wird oft eine aufwändige und kostenintensive Ausführungsform zur Durchführung der Fokusverstellung angewendet. Dabei stoßen diese Systeme wegen der mechanischen Belastungen im Bereich der dafür notwendigen Lagerungen und Führungen sehr schnell an ihre Grenzen. Insbesondere bei einer kontinuierlichen und häufig notwendigen Fokusverstellung treten immer wieder Probleme hinsichtlich der Standfestigkeit beziehungsweise Zuverlässigkeit auf. Darüber hinaus benötigen derartige Fokusverstellungen in der Regel relativ viel Zeit und sind deshalb nicht in der Lage, auf schnell wechselnde Objektabstände zu reagieren.

Bei den Ausführungen, wo zur Fokusverstellung nicht das Empfangsobjektiv sondern der ortsauflösende Lichtempfänger bewegt wird, sind meist Probleme im Bereich der Wärmeableitung vom Lichtempfänger vorhanden. Darüber hinaus ist die Belastung der beweglichen elektrischen Verbindungen zwischen dem ortsauflösenden Lichtempfänger und einer nachfolgenden Signalverarbeitungseinheit bei der Bewegung des Lichtempfängers zur Fokusverstellung meist sehr problematisch.

Die DE 198 04 803 A1 offenbart einen Triangulationstaster, bei dem Empfangs- oder Sendelinse durch ein Einstellmittel beweglich ist. Dies dient aber nicht der Fokussierung, sondern der Einstellung des Tastbereichs, und der Triangulationstaster ist auch nicht für das Lesen von Codes ausgebildet.

In der EP 1 698 995 A1 ist eine Identifikationseinrichtung mit einem ortsauflösenden Empfänger offenbart, der über einen Schwenkarm drehbar gelagert ist und bei Verschwenkung seinen Abstand zu einer stationären Optik ändert, um die optisch wird-same Bildschnittweite zu verändern. In verschiedenen Ausführungsformen sind an dem Schwenkarm optische Elemente wie zusätzliche Linsen, Hohlspiegel oder Wölbspiegel vorgesehen.

Die DE 199 50 060 A1 beschreibt eine optoelektronische Sensoreinrichtung für ein Kraftfahrzeug, die am Rückspiegel montiert wird. Dabei wird ein Objektiv, das einem Sensorarray zugeordnet ist, über einen Schwenkarm in eine von zwei Positionen verbracht, nämlich entweder in eine Fokussierung unendlich für eine Abstandsdetektion oder in eine Nahfokussierung, um die Windschutzscheibe zu überwachen.

Der Erfindung liegt daher die Aufgabe zugrunde, eine Identifikationseinrichtung mit einer einfachen, kostengünstigen Fokusverstellung zu schaffen. Dabei soll die Fokusverstellung sowohl zur manuellen Einstellung bei bekanntem Objektabstand als auch zu einer integrierten Autofokuseinstellung bei wechselndem Objektabstand geeignet sein.

Zur Lösung dieser Aufgabe ist eine Vorrichtung gemäß Anspruch 1 und ein Verfahren gemäß Anspruch 7 vorgesehen. Der Erfindung liegt also die Idee zu Grunde, zur Fokussierung von unterschiedlich weit entfernten Objektebenen auf dem Lichtempfänger die Empfangsoptik mit einer in einem Drehgelenk gelagerten Schwinge entlang eines Bogens oder einer Kreisbogenbahn beweglich zu lagern. Zur Bewegung der Schwinge um das Drehlager ist die Schwinge mit einem Stellelement mechanisch verbunden, so dass damit der Abstand zwischen der Empfangsoptik und dem Lichtempfänger zur Fokussierung kontinuierlich verändert werden kann. Dabei ist die Schwinge parallel zur linienförmigen Erfassung des Codes ausgerichtet (Drehpunkt quer zur Empfangszeile), so dass eine von der kreis- oder bogenförmigen Bewegung der Empfangsoptik hervorgerufene Verschiebung des Erfassungsbereiches auf der Objektebene nur in Richtung der linienförmigen Erfassung des Codes stattfindet und damit keinen gravierenden negativen Einfluss auf die Abbildung zur Folge hat. Um die Verkippung der Empfangsoptik gering zu halten, ist es vorteilhaft, eine möglichst lange Schwinge zu wählen bzw. diese möglichst langgestreckt auszubilden.

Erfindungsgemäß werden damit die Vorteile einer kostengünstigen und baukleinen Fokusverstellung ohne bewegte Kabel verwirklicht. Die Wärmeanbindung des Empfangselements ist gut, und der Schielwinkel liegt in Richtung der Beleuchtungslinie, es ist also keine Verbreiterung der Sendelinie über den Abstand erforderlich, und die Linie wird lediglich etwas seitlich versetzt aufgenommen, was für das Leseergebnis keine negativen Auswirkungen hat. Die Fokusverstellung ist aufgrund der geringen Masse extrem schnell. Eine Justage bei Inbetriebnahme ist nicht notwendig, sondern die Fokusbereiche können bereits im Produktionsprozess eingelernt werden.

In einer besonderen Ausführungsform besteht die Schwinge aus einer an einem Zweifachgelenk fixierten Doppelschwinge. Die beiden Arme der Doppelschwinge sind mit einem Koppelglied drehbar verbunden, so dass die Doppelschwinge einer Parallelogrammanordnung entspricht. Weil die Empfangsoptik am Koppelglied der Doppelschwinge befestigt ist, wird die Empfangsoptik bei der Bewegung auf der Kreisbogenbahn nicht geneigt. Mit anderen Worten wird die Richtung der optischen Achse der Empfangsoptik nicht verändert, sondern nur deren Position. Dadurch reduziert sich der ohnehin schon geringe negative Einfluss hinsichtlich der Abbildungsbeeinflussung durch die kreisförmige Bewegung der Empfangsoptik.

In einer weiteren Ausführungsform der Erfindung ist es vorgesehen, dass als Drehgelenk eine Blattfederlagerung eingebaut ist. Da die Schwinge im Drehlager meist nur innerhalb eines geringen Drehwinkelbereiches verschwenkt werden muss, ist durch die Verwendung einer Blattfederlagerung eine besonders spielfreie und reproduzierbare Verschwenkung der Schwinge und damit der Bewegung der Empfangsoptik gewährleistet. Alternativ können Gleit- oder Kugellager eingesetzt werden.

In einer vorteilhaften Ausführungsvariante der Erfindung ist ein Lagerbock zur Aufnahme des Drehlagers, das Stellelement zur Bewegung der Schwinge und/oder der Lichtempfänger auf einer gemeinsamen Elektronikkarte angeordnet. Dabei können neben dem Lichtempfänger auch der Lagerbock und das Stellelement beispielsweise über Passstifte in entsprechende Aufnahmebohrungen in der

Elektronikkarte eingesetzt und mittels Lötverbindungen auf der Elektronikkarte befestigt werden. Damit kann zugleich über diese Verbindung eine Justierung erfolgen. Es ist denkbar, nur einen Teil der Elemente auf der Elektronikkarte und etwa das Stellelement extern vorzusehen. Mit dem Anordnen auf der Elektronikkarte wird eine sehr kostengünstige und kompakte Baugruppe zur Durchführung einer Fokusverstellung in der Identifikationseinrichtung geschaffen. Gleichzeitig ist es möglich, durch die Nutzung der ohnehin vorhandenen sehr genauen Elektronikkartenfertigung, den Montage- und Justageaufwand bei der Erstellung dieser Baugruppe wesentlich zu vereinfachen, besonders wenn der Lichtempfänger unmittelbarer Bestandteil der Elektronikkarte ist.

Wenn die Identifikationseinrichtung nur einmalig bei der Inbetriebnahme oder nur gelegentlich, zum Beispiel bei einer Umrüstung der Identifikationseinrichtung auf einen veränderten Objektabstand eingestellt werden muss, ist es vorgesehen, dass das in der Identifikationseinrichtung eingebaute Stellelement eine manuell betätigte Einstellschraube oder ein Exzenterhebel ist. Dabei ist es in einer Weiterbildung dieses Erfindungsgedankens alternativ möglich, dass das manuelle Stellelement mit einer definierten Einstellanzeige und/oder einer Rastposition ausgestattet ist. Damit ist es einfach und kostengünstig möglich, die Identifikationseinrichtung auf eine Objektebene in einem bekannten Abstand zu fokussieren.

Besonders vorteilhaft ist es, wenn das Stellelement ein elektrisch betätigter Aktor ist, weil damit eine Veränderung der Fokussierung auf unterschiedlich weit entfernte Objektebenen automatisch erfolgen kann. Dazu kann ein Motor, beziehungsweise ein Schrittmotor, sowohl von einer in der Identifikationseinrichtung eingebauten Abstandsmesseinrichtung, oder von einer externen Stellgröße angesteuert werden. Ebenso ist es möglich, dass das Stellelement ein Piezoelement, eine Tauchspule, ein Linear- bzw. Zirkularaktor oder eine sonstige Einstelleinheit ist.

Das erfindungsgemäße Verfahren kann auf ähnliche Weise weitergebildet werden und zeigt dabei ähnliche Vorteile. Derartige Weiterbildungen sind beispielhaft, aber nicht abschließend in den sich an die unabhängigen Ansprüche anschließenden Unteransprüchen ausgeführt.

Vorteilhafterweise ist bei dem Verfahren vorgesehen, die Schwinge zu justieren, indem sie mittels eines Lagerbocks gehalten wird, welcher gemeinsam mit dem ortsauflösenden Lichtempfänger aus einer Elektronikkarte angebracht wird. Die Justierung und Montage erfolgt dann bevorzugt durch justagepositionsrichtige Befestigung oder Verlötung, etwa durch entsprechend bei der Elektronikkartenherstellung oder später angeordnete Lötstifte. Auf diese Weise können Prozesse der Elektronikkartenherstellung, deren Genauigkeit relativ gut beherrscht wird, die spätere Justage ersetzen oder zumindest erheblich erleichtern.

Die Erfindung wird im Folgenden beispielhaft unter Bezugnahme auf die Figuren 1 bis 4 erläutert. In der Zeichnung zeigt:
- Fig. 1: In schematischer Darstellung eine Seitenschnittansicht von einer Identifikationseinrichtung mit einer an einer Schwinge angebrachten Empfangsoptik.
- Fig. 2: In schematischer Darstellung eine Seitenschnittansicht von einer Identifikationseinrichtung mit einer an einer Doppelschwinge angebrachten Empfangsoptik.
- Fig. 3: In schematischer Darstellung eine Seitenansicht von einer auf einer Elektronikkarte angebrachten Fokusverstelleinrichtung.
- Fig. 4: In schematischer Darstellung eine Draufsicht von einer auf einer Elektronikkarte angebrachten Fokusverstelleinrichtung.

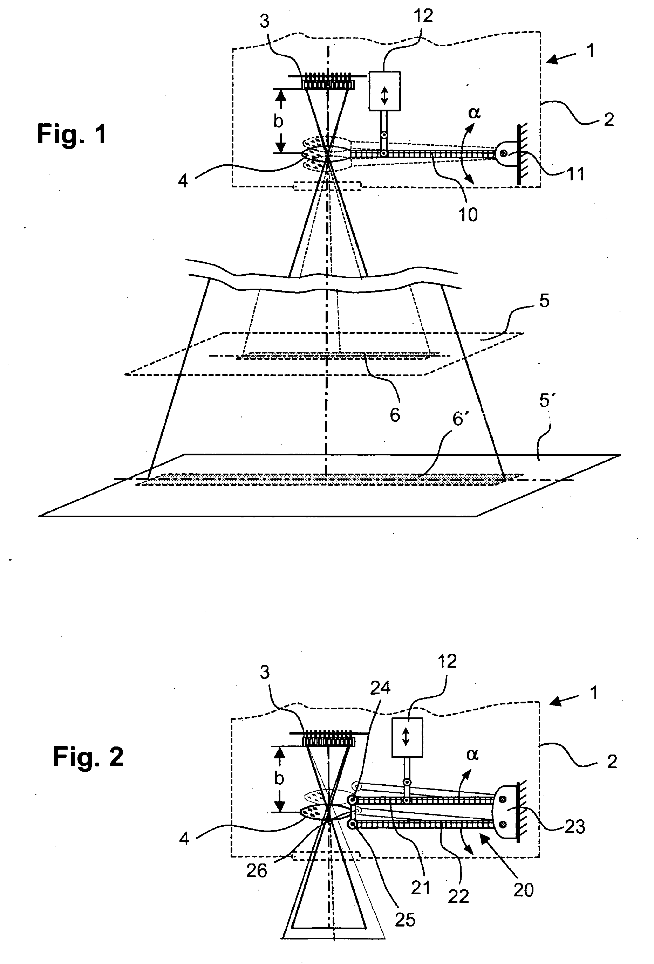

In Figur 1 ist ausschnittsweise eine Identifikationseinrichtung in Form eines Codelesers 1 beispielhaft dargestellt. Der Codeleser 1 besitzt in einem Gehäuse 2 einen ortsauflösenden Lichtempfänger 3. Dieser ortsauflösende Lichtempfänger 3 kann, wie in Figur 1 gezeigt, zur Erfassung eines eindimensionalen Codes ausgebildet sein. In diesem Fall ist der ortsauflösende Lichtempfänger 3 beispielsweise eine CCD-Zeile oder eine CMOS-Zeile. Beim Einsatz des Codelesers zur Erfassung von zweidimensionalen Informationen ist der ortsauflösende Lichtempfänger 3 dann beispielsweise eine CCD-Matrix oder eine CMOS-Matrix. Eine bevorzugte Anwen dung ist das Vorbeifördern der zu lesenden Codeinformation am Codeleser 1, etwa als stationärer Codeleser für Pakete in einem Logikzentrum oder für die Sortierung von Fluggepäck, bei der die Bildinformation zeilen- oder abschnittsweise eingelesen und zu einem Gesamtbild zusammengesetzt wird.

Im Gehäuse 2 ist weiterhin eine Empfangsoptik 4 eingebaut, mit der ein Abbild von einer Objektebene 5, 5' auf dem ortsauflösenden Lichtempfänger 3 erzeugt wird. Die Empfangsoptik 4 ist zum besseren Verständnis symbolisch nur durch eine Einzellinse dargestellt. Es ist aber genauso möglich, dass die Empfangsoptik 4 ein Empfangsobjektiv ist, das aus mehreren miteinander verbundenen und/oder räumlich getrennten Optikkomponenten zusammengesetzt ist. Da der ortsauflösende Lichtempfänger 3 bei dem in Figur 1 dargestellten Codeleser 1 eine Empfangszeile ist, wird von der Objektebene 5, 5' auch nur eine linienförmige Zone 6, 6' erfasst. Dies bedeutet, dass ein in der Objektebene 5, 5' vorhandener Code ebenfalls linienförmig erfasst wird.

Aus diesem Grunde muss die Objektebene 5, 5' auch nur im Bereich der linienförmigen Zone 6, 6' ausgeleuchtet sein. Abhängig von der Einsatzbedingung und der jeweiligen Aufgabenstellung des Codelesers wird die linienförmige Zone 6, 6' zusätzlich von einer in der Fig. 1 nicht dargestellten Beleuchtungseinrichtung ausgeleuchtet. Diese Beleuchtungseinrichtung, die mit einer oder mehreren Lichtquellen ausgestattet sein kann, ist entweder im Codeleser 1 integriert oder ist als eine eigenständige externe Beleuchtungseinheit neben dem Codeleser 1 angeordnet.

Die Empfangsoptik 4 ist bei der Darstellung in Figur 1 an einem Ende einer Schwinge 10 angebracht. Am gegenüberliegenden Ende ist die Schwinge 10 an einem Drehgelenk 11 befestigt. Auf diese Weise kann die Schwinge 10 durch das Drehgelenk 11 in beiden Richtungen entlang eines Winkels α verschwenkt werden. Mit dieser Bewegung der Schwinge 10 verändert sich ein Abstand b zwischen der Empfangsoptik 4 und dem ortsauflösenden Lichtempfänger 3 und damit auch die Fokussierung. Entsprechend den optischen Abbildungsgesetzen wird beispielsweise dann, wenn der Abstand b in etwa so groß ist wie die Brennweite der Empfangsoptik 4, eine sehr weit vom Codeleser 1 entfernte Objektebene 5, 5' scharf auf dem Lichtempfänger 3 abgebildet. Wird dagegen der Abstand b kontinuierlich größer als die Brennweite der Empfangsoptik 4, so wird die scharf auf dem Lichtempfänger 3 abgebildete Objektebene 5, 5' sich kontinuierlich näher auf den Codeleser 1 zu bewegen.

Im Codeleser 1 ist ebenfalls ein Stellelement 12 vorhanden, das kraftschlüssig oder formschlüssig mit der Schwinge 10 verbunden ist. Damit ist es möglich, die Schwinge 10 um das Drehgelenk 11 herum zu verschwenken, d. h. die Winkelposition der Schwinge 10 und damit den Abstand b von der Empfangsoptik 4 zum Lichtempfänger 3 zu verändern. Dieses Stellelement 12 kann im einfachsten Fall beispielsweise eine manuell betätigte Einstellschraube oder ein Exzenter sein. Es ist aber auch möglich, dass das Stellelement 12 ein elektrisch betätigter Aktor ist. Derartige elektrisch betätigte Aktoren sind beispielsweise ein oder mehrere Piezoelemente, eine Tauchspule oder ein Linear- bzw. Zirkularaktor, um nur einige Ausführungsarten zu benennen. Abweichend von der Darstellung muss der Angriffspunkt der Schwinge 10 nicht das der Empfangsoptik 4 gegenüberliegende Ende sein, sondern es sind nahezu beliebige Anordnungen des fixierten Stützpunkts vorstellbar.

Die in Figur 1 dargestellte Schwinge 10 ist in Figur 2 in Form einer Doppelschwinge 20 ausgeführt. Dabei besteht die Doppelschwinge 20 aus den beiden gleich langen Schwingarmen 21 und 22, die jeweils auf einer Seite in einem Doppelgelenk 23 fixiert sind. Auf der dem Doppelgelenk 23 abgewandten Seite der Doppelschwinge 20 sind die beiden Schwingarme 21, 22 über zwei Drehlager 24 und 25 mit einem Koppelglied 26 verbunden. Die beiden Drehpunkte im Doppelgelenk 23 und die Drehlager 24 und 25 im Koppelglied 26 sind gleich weit voreinander entfernt, so dass die gesamte Doppelschwinge 20 eine Parallelogrammanordnung bildet. Bei einer Bewegung der Doppelschwinge 20 entlang dem Winkel α wird mit dieser Parallelogrammanordnung erreicht, dass die an dem Koppelglied 26 angeordnete Empfangsoptik 4 bei Veränderung des Abstandes b nur parallel verschoben wird. Dabei findet eine Neigung der optischen Achse der Empfangsoptik 4, im Gegensatz zu der in Figur 1 dargestellten Ausführung, bei Verwendung dieser Doppelschwinge 20 nicht statt. Damit sind auch mögliche, durch die Neigung der Empfangsoptik 4 hervorgerufene Abbildungsfehler, ausgeschlossen.

Es sind weitere Ausführungsformen der Schwinge 10, 20 denkbar, insbesondere ein Wattmechanismus oder ein Scherenmechanismus.

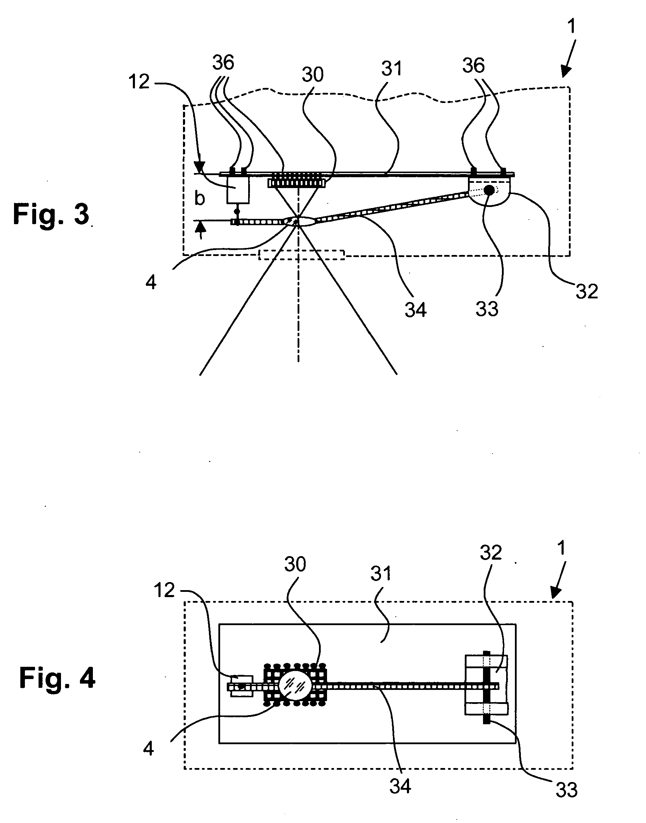

Eine besonders vorteilhafte Ausführungsvariante der Erfindung ist schematisch in Figur 3 dargestellt. In dieser Seitenansicht ist ein Ausschnitt von einem Codeleser 1 gezeigt, in dem ein zweidimensionaler ortsauflösender Lichtempfänger 30 eingebaut ist. Mit diesem Lichtempfänger 30 ist der Codeleser 1 in der Lage, von einem in der Objektebene angeordneten Code zwei oder mehr Leselinien gleichzeitig zu erfassen. Wie aus Figur 3 ersichtlich, ist der ortsauflösende Lichtempfänger 30 auf einer Elektronikkarte 31 aufgesetzt und dabei natürlich auch mit dieser Elektronikkarte 31 elektrisch kontaktiert.

Auf der Elektronikkarte 31 ist weiterhin ein Lagerbock 32 zur Aufnahme eines Drehlagers 33 und das Stellelement 12 angebracht. Im Drehlager 33 ist auch hier eine Schwinge 34 beweglich gelagert, an der die Empfangsoptik 4 angebracht ist. Das ebenfalls auf der Elektronikkarte 31 angebrachte Stellelement 12 kann somit auch hier den Abstand b zwischen der Empfangsoptik 4 und dem Lichtempfänger 30 verändern. Der Lichtempfänger 30, der Lagerbock 32 und das Stellelement 12 sind mittels mehrerer Lötstifte 36 genau positioniert in der Elektronikkarte 31 eingebaut d. h. eingelötet. Auf diese Weise wird die Elektronikkarte 31 zu einer sehr kompakten und kostengünstigen Baugruppe, in der alle für die Fokusverstellung notwendigen Komponenten in genauer geometrischer Zuordnung angeordnet sind.

Figur 4 zeigt eine Draufsicht von der in Figur 3 dargestellten Ausführungsvariante der Erfindung. Hierbei ist insbesondere der auf der Elektronikkarte 31 angebrachte zweidimensionale ortsauflösende Lichtempfänger 30 zu sehen. Ebenso ist in einer schematischen Darstellung der Lagerbock 32 mit dem Drehlager 33 zu erkennen. Nicht unerwähnt bleiben soll bei der Erläuterung dieser in Figur 3 und 4 gezeigten Ausführungsvariante der Erfindung der Hinweis, dass es auch hier möglich ist, die Schwinge 34, wie in Figur 2 ausführlich beschrieben, ebenfalls durch eine Doppelschwinge 20 zu ersetzten. Der durch die parallele Verschiebung der Empfangsoptik 4 erreichbare Vorteil kann somit auch bei dieser kostengünstigen und kompakten Ausführungsvariante genutzt werden.

Anstelle der Empfangsoptik 4 ist vorstellbar, den Lichtempfänger 3 mit einer Schwinge beweglich anzuordnen, um alternativ über Verschwenkungen des Lichtempfänger 3 statt der Empfangsoptik 4 die richtige Fokuslage einzustellen.

### Bezugszeichenliste

- 1: Codeleser
- 2: Gehäuse
- 3: Lichtempfänger
- 4: Empfangsoptik
- 5, 5': Objektebene
- 6, 6': linienförmige Zone
- 10: Schwinge
- 11: Drehgelenk
- 12: Stellelement
- 20: Doppelschwinge
- 21: Schwingarm
- 22: Schwingarm
- 23: Doppelgelenk
- 24: Drehlager
- 25: Drehlager
- 26: Koppelglied
- 30: zweidimensionaler Lichtempfänger
- 31: Elektronikkarte
- 32: Lagerbock
- 33: Drehlager
- 34: Schwinge
- 36: Lötstifte
- α: Winkel
- b: Abstand

## Patentansprüche

1. Stationärer Codeleser (1) zur linienförmigen Erfassung von einem in einer Objektebene angeordneten Code, wobei in dem Codeleser (1) ein ortsauflösender Lichtempfänger (3) und eine Empfangsoptik (4) vorhanden ist, mit der die Objektebene auf einem ortsauflösenden Lichtempfänger (3) in Form einer Empfangszeite abgebildet wird, wobei zur Fokussierung von unterschiedlich weit entfernten Objektebenen auf dem Lichtempfänger (3) die Empfangsoptik (4) am Ende einer in einem Drehlager (33) in dem Codeleser (1) gelagerten Schwinge (10, 20) entlang eines Bogens beweglich gelagert ist, **dadurch gekennzeichnet, dass** der Codeleser (1) dafür ausgebildet ist, Bildinformationen zeilenweise einzulesen und zu einem Gesamtbild zusammenzusetzen, dass die durch ein Stellelement (12) des Codelesers (1) bewegbare Schwinge (10, 20) parallel zur linienförmigen Erfassung des Codes ausgerichtet ist, wobei der Drehpunkt quer zur Emfangszeite liegt, so dass eine von der kreis- oder bogenförmigen Bewegung der Empfangsoptik (4) hervorgerufene Verschiebung des Erfassungsbereichs auf der Objektebene nur in Richtung der linienförmigen Erfassung des Codes stattfindet, und dass auf einer gemeinsamen Elektronikkarte (31) ein Lagerbock (31) zur Aufnahme des Drehlagers (33) und der ortsauflösende Lichtempfänger (3) angebracht sind.

2. Codeleser (1) nach Anspruch 1, **dadurch gekennzeichnet, dass** die Schwinge eine an einem Doppelgelenk (23) fixierte Doppelschwinge (20) in Parallelogrammanordnung ist, wobei die Empfangsoptik (4) an einem die beiden Schwingarme der Doppelschwinge (20) verbindenden Koppelglied (26) angebracht ist.

3. Codeleser (1) nach Anspruch 1 und 2, **dadurch gekennzeichnet, dass** die zur Veränderung des Abstandes zwischen der Empfangsoptik (4) und dem Lichtempfänger (3) vorhandene Schwinge (10, 20) auf einer der Empfangsoptik (4) abgewandten Seite in einer Blattfederlagerung fixiert ist.

4. Codeleser (1) nach einem der vorstehenden. Ansprüche, **dadurch gekennzeichnet, dass** das Stellelement zur Bewegung der Schwinge (34) auf der gemeinsamen Elektronikkarte (31) angebracht ist.

5. Codeleser (1) nach einem der vorstehenden Ansprüche, **dadurch gekennzeichnet, dass** das Stellelement (12) eine manuell betätigte Einstellschraube oder ein Exzenterhebel ist und dass die Einstellschraube oder der Exzenterhebel mit einer definierten Einstellanzeige und/oder einer Rastposition ausgestattet ist.

6. Codeleser (1) nach einem der vorstehenden Ansprüche, **dadurch gekennzeichnet, dass** das Stellelement (12) ein elektrisch betätigter Aktor ist.

7. Verfahren zur linienförmigen Erfassung von in einer Objektebene angeordneten Codes unter Verwendung eines Codelesers gemäß Anspruch 1-6, wobei die Empfangsoptik (4) die Objektebene auf den ortsauflösenden Lichtempfänger (3) in Form einer Emfangszeite abbildet, und wobei zur Fokussierung von unterschiedlich weit entfernten Objektebenen auf dem Lichtempfänger (3) die Empfangsoptik (4) mittels einer Schwinge (10, 20) entlang eines Bogens bewegt wird, **dadurch gekennzeichnet, dass** Bildinformation zeilenweise eingelesen und zu einem Gesamtbild zusammengesetzt wird, dass die Bewegung parallel zur linienförmigen Erfassung des Codes erfolgt, wobei der Drehpunkt quer zur Emfangszeite liegt, und dass die Schwinge (10, 20) justiert wird, indem sie mittels eines Lagerbocks (32) gehalten wird, welcher gemeinsam mit dem ortsauflösenden Lichtempfänger (3) auf einer Elektronikkarte (31) angebracht ist.

## Claims

1. A stationary code reader (1) for the linear detection of a code arranged in an object plane, wherein a spatially resolving light receiver (3) and an optical receiving system (4) are present in the code reader (1) with which the object plane is imaged on a spatially resolving light receiver (3) in the form of a receiver row, wherein the optical receiving system (4) is movably mounted along an arc at the end of a link (10, 20) journalled in the code reader (1) in a rotary bearing (33) for the focusing of differently far away object planes on the light receiver (3), **characterized in that** the code reader (1) is designed to read in image information line-wise and to put it together to form a total image; **in that** the link (10, 20) movable by a positioning element (12) of the code reader (1) is oriented in parallel to the linear detection of the code, with the center of rotation lying transversely to the receiver row so that a displacement of the detection zone on the object plane caused by a circular or arcuate movement of the optical receiving system (4) only takes place in the direction of the linear detection of the code; and **in that** a bearing block (32) for the reception of the rotary bearing (33) and of the spatially resolving light receiver (3) is attached to a common electronics card (31).

2. A code reader (1) in accordance with claim 1, **characterized in that** the link is a double link (20) fixed at a double joint (23) in a parallelogram arrangement, with the optical receiving system (4) being attached to a coupling member (26) connecting the two pivot arms of the double link (20).

3. A code reader (1) in accordance with claim 1 and claim 2, **characterized in that** the link (10, 20) present for the change of the spacing between the optical receiving system (4) and the light receiver (3) is fixed in a plate spring journalling at a side remote from the optical receiving system (4).

4. A code reader (1) in accordance with any one of the preceding claims, **characterized in that** the positioning element for the movement of the link (34) is attached to the common electronics card (31).

5. A code reader (1) in accordance with any one of the preceding claims, **characterized in that** the positioning element (12) is a manually actuated setting screw or an eccentric lever; and **in that** the setting screw or the eccentric lever is equipped with a defined setting display and/or a latch position.

6. A code reader (1) in accordance with any one of the preceding claims, **characterized in that** the positioning element (12) is an electrically activatable actuator.

7. A method for the linear detection of codes arranged in an object plane using a code reader in accordance with any one of the claims 1 to r, wherein the optical receiving system (4) images the object plane on the spatially resolving light receiver (3 in the form of a receiver row, and wherein the optical receiving system (4) is moved along an arc by means of a link (10, 20) for the focusing of differently far away object planes on the light receiver, **characterized in that** the movement takes place in parallel to the linear detection of the code, with the center of rotation lying transversely to the receiver row; and **in that** the link (10, 20) is adjusted **in that** it is held by means of a bearing block (32), which is attached to an electronics card (31) together with the spatially resolving light receiver (3).

## Revendications

1. Lecteur de code stationnaire (1) pour la détection sous forme linéaire d'un code agencé dans un plan objet, dans lequel dans le lecteur de code (1) sont prévus un récepteur de lumière (3) à résolution locale et une optique de réception (4) au moyen de laquelle une image du plan objet est formée sur un récepteur de lumière (3) à résolution locale, sous la forme d'une ligne de réception, dans lequel pour la focalisation de plans objets éloignés à des distances différentes sur le récepteur de lumière (3), l'optique de réception (4) est montée à l'extrémité d'une bielle (10, 20) montée dans le lecteur de code (1) dans un palier pivotant (3), en déplacement le long d'un arc,
**caractérisé en ce que** le lecteur de code (1) est réalisé pour lire des informations d'image ligne par ligne et les rassembler pour donner une image globale, **en ce que** la bielle (10, 20) déplaçable par un élément de positionnement (12) du lecteur de codes (1) est orientée parallèlement à la détection linéaire du code, de sorte que le centre de rotation est situé transversalement par rapport à la ligne de réception, de sorte qu'un déplacement, provoqué par le déplacement sous forme circulaire ou sous forme d'arc de l'optique de réception (4), de la zone de détection sur le plan objet se produit uniquement en direction de la détection linéaire du code, et **en ce qu'**un bloc de montage destiné à la réception du palier pivotant (33), et le récepteur de lumière (3) à résolution locale sont montés sur une carte électronique (31) commune.

2. Lecteur de code (1) selon la revendication 1, **caractérisé en ce que** la bielle est une double bielle (20) fixée sur une articulation double (23), suivant un agencement à parallélogramme, dans lequel l'optique de réception (4) est montée sur un organe d'accouplement (26) qui relie les deux bras de la double bielle (20).

3. Lecteur de code (1) selon la revendication 1 et 2, **caractérisé en ce que** la bielle (10, 20) prévue pour modifier la distance entre l'optique de réception (4) et le récepteur de lumière (3) est fixée dans une monture à ressort à lame sur un côté détourné de l'optique de réception (4).

4. Lecteur de code (1) selon l'une des revendications précédentes, **caractérisé en ce que** l'élément de positionnement destiné au déplacement de la bielle (34) est monté sur la carte électronique commune (31).

5. Lecteur de code (1) selon l'une des revendications précédentes, **caractérisé en ce que** l'élément de positionnement (12) est une vis de réglage ou un levier à excentrique à actionnement manuel, et **en ce que** la vis de réglage ou le levier à excentrique et équipé(e) d'une indication de réglage définie et/ou d'une position d'enclenchement.

6. Lecteur de code (1) selon l'une des revendications précédentes, **caractérisé en ce que** l'élément de positionnement (12) est un actionneur à fonctionnement électrique.

7. Procédé pour la détection sous forme linéaire de codes agencés dans un plan objet en utilisant un lecteur de code selon l'une des revendications 1 à 6, dans lequel l'optique de réception (4) forme l'image du plan objet sur le récepteur de lumière (3) à résolution locale sous la forme d'une ligne de réception, dans lequel pour focaliser des plans objets éloignés à des distances différentes sur le récepteur de lumière (3), l'optique de réception (4) est déplacée au moyen d'une bielle (10, 20) le long d'un arc,
**caractérisé en ce que** les informations d'image sont lues ligne par ligne et sont regroupées pour donner une image globale, **en ce que** le mouvement a lieu parallèlement à la détection linéaire du code, de sorte que le centre de rotation est situé transversalement à la ligne de réception, et **en ce que** la bielle (10, 20) est ajustée en étant maintenue au moyen d'un bloc de montage (32) qui est monté sur une carte électronique (31) conjointement avec le récepteur de lumière (3) à résolution locale.
